Europäisches Patentamt

European Patent Office

Office européen des brevets

(19)

(11) Publication number: **0 135 677**
**A1**

(12) # EUROPEAN PATENT APPLICATION

(21) Application number: **84107223.4**

(22) Date of filing: **23.06.84**

(51) Int. Cl.⁴: **C 08 L 67/02, C 08 L 51/04**

(30) Priority: **05.07.83 US 510599**

(43) Date of publication of application: **03.04.85**
**Bulletin 85/14**

(84) Designated Contracting States: **DE FR IT NL**

(71) Applicant: **GENERAL ELECTRIC COMPANY, 1 River Road, Schenectady New York 12305 (US)**

(72) Inventor: **Michel, Rodney Lee, 1938 Dalehaven Drive, Evansville Indiana 47715 (US)**

(74) Representative: **Catherine, Alain, General Electric Frauenstrasse 32, D-8000 München 5 (DE)**

(54) **Composition of polyester resin.**

(57) Compositions comprising high molecular weight polyester resins, especially poly(alkylene terephthalate) resins, and graft derivations of ethylene-propylene terpolymers are compatible over a broad range of amounts. The resultant blends are processable into shaped articles which have a very glossy surface, and they also substantially retain the mechanical properties of the polyester resins alone.

## COMPOSITION

### BACKGROUND OF THE INVENTION

The present invention relates to compositions comprising blends of polymer resins. More particularly, it relates to blends of high molecular weight linear polyesters and copolyesters of glycols and terephthalic and/or isophthalic acid with graft derivatives of ethylene-propylene terpolymers.

With the development of molecular weight control, the use of nucleating agents and two-step molding cycles, poly(ethylene terephthalate) has become an important constituent of injection moldable compositions. Poly(1,4-butylene terephthalate), because of its very rapid crystallization from the melt, is uniquely useful as a component in molding resins. The latter is commercially available (e.g. VALOX® - General Electric Co.). Work pieces molded from such polyester resins, alone or combined with reinforcements, in comparison with other thermoplastic, offer a high degree of surface hardness and abrasion resistance, high gloss, and lower surface friction.

Grafted derivatives of ethylene-propylene-diene terpolymer and compositions of such polymers with other resins are known in the art and described in the patent literature. Several of them are commercially available (e.g. ROVEL® - Uniroyal, Inc.). It has been disclosed, for instance, that olefinic copolymers and terpolymers can be grafted with styrene, styrene-acrylonitrile, methyl methacrylate, styrene-methyl methacrylate and, blended e.g., with styrene-acrylonitrile copolymer resins, to provide thermoplastics which can be molded, extruded or vacuum formed into articles having good tensile and impact strengths. Polymers and blends of these types and methods of their preparation are described in U.S. Patent No. 4,166,081 and U.S. Patent No. 4,202,948. Thermoplastic resin blends of polysulfone resin and graft derivatives of ethylene-propylene terpolymers are also described in U.S. Patent No. 3,641,207.

It has now been discovered that graft derivatives of ethylene-propylene-non-conjugated diene terpolymers as described can be blended with polyesters to obtain advantageous properties after molding. Surprisingly, such properties are obtained over a wide range of compositions. Especially noteworthy are the retention of gloss in the blends and enhanced resistance to environmental stress cracking and crazing.

## SUMMARY OF THE INVENTION

According to the present invention there are provided thermoplastic compositions suitable for extrusion, molding, or shaping by other means into various articles, comprising an admixture of (a) a polyester resin, and (b) an ethylene-propylene-non-conjugated diene interpolymer grafted with the homopolymer or copolymer of monoethylenically unsaturated monomers as disclosed in U.S. Patent No. 4,202,948, for example, styrene, styreneacrylonitrile, methyl methacrylate or styrene-methyl methacrylate, halostyrenes, alpha methylstyrene, p-methylstyrene acrylonitrile, methacrylonitrile, acrylic acid, methacrylic acid, the lower alkyl esters of acrylic and methacrylic acid, styrene maleic anhydride and the like.

The compositions are moldable into parts, pieces and articles which possess a very glossy surface. Mechanical properties such as impact strength are comparable to those of conventional polyester blends. The compositions are able to tolerate the presence of stress cracking agents, such as gasoline, and/or other additives which normally attack or otherwise have a harmful effect on polyesters.

## DESCRIPTION OF THE INVENTION

Preferred for use as component (a) in the compositions of this invention are high molecular weight polyester resins, especially poly(C$_1$-C$_4$ alkylene terephthalate) resins.

The polyester resins suitable for use in the practice of this invention are available commercially or can be prepared by known techniques, such as by the transesterification of esters of terephthalic acid with ethylene glycol or butanediol followed by polymerization; or by heating glycols with free acids or with halide derivatives thereof; or by similar processes. These are described in U.S. Patent No. 2,465,319 (to Whinfield, et al.), in U.S. Patent No. 3,047,539 (to Pengilly), and elsewhere in the literature.

Special mention is made of poly(1,4-butylene terephthalate) resin which is available from General Electric Company under the trade designation VALOX® resin, poly(ethylene terephthalate) resin, and mixtures of the two resins. They may contain minor amounts, e.g., from 0.5 to 15 mole percent of the total repeat units, of other aliphatic linkages, e.g., those of from 2 to 10 carbon atoms, such as dimethylene, trimethylene, hexamethylene, decamethylene, and the like, linkages, as well as cycloaliphatic, e.g., 1,4-cyclohexanedimethylene linkages. In addition to the terephthalic acid units, other dicarboxylic units, such as adipic, napthalene dicarboxylic, isophthalic and orthophthalic units may be present in small amounts, e.g., from about 0.5 to about 15 mole percent of the total acid units.

Preferably, the foregoing polyester resins will have an intrinsic viscosity of at least about 0.2 deciliters per gram as measured in 60:40 phenol/tetrachloroethane at 30°C., for poly(ethylene terephthalate), and at least 0.6 deciliters per gram, same basis for poly(1,4-butylene terephthalate).

Component (b) is a resinous composition of the homopolymer or copolymer of monoethylenically unsaturated monomers as disclosed in U.S. Patent No. 4,202,948 grafted to a rubbery terpolymer comprising copolymerized units of ethylene and propylene and a non-conjugated diolefin (diene).

The non-conjugated dienes used in the preparation of the terpolymer elastomers may include open chain non-conjugated dienes, such as 1,4-hexadiene and also cyclic (especially bridged ring) non-conjugated dienes such as dicyclopentadiene, 5-methyl-2-norbornene, 5-ethylidiene-2-norborne, and 1,4-cyclooctadiene. The respective weight ratio ethylene to propylene in the elastomer may range from 40/60 to 75/25. The content of the additional monomer, such as the non-conjugated diene in the terpolymer can range from about 1% to about 20% by weight. The preferred diene is 5-ethylidene-2-norbornene.

Methods for the preparation of the foregoing rubbery terpolymers are described in U.S. Patent Nos. 2,933,480; 3,000,866; and 3,000,867.

The resin forming monomers useful for copolymerization with the described rubbery copolymers and terpolymers include styrene, $\alpha$-methylstyrene, p-methylstyrene and other alkyl ring substituted styrenes and acrylics such as acrylonitrile, acrylates and alkacrylates. The ester portion of the acrylate is generally alkyl from one to about eight carbon atoms, inclusive, preferably one to about six carbon atoms, inclusive. The "alk" portion of the "alkacrylate" is alkyl of one to three carbon atoms, inclusive. Examples of acrylate and alkacrylate include ethylacrylate, n-butyl acrylate, 2-ethylhexylacrylate, methylmethacrylate, propylethacrylate and isopentylpropacrylate. Mixtures of styrenics and acrylates can also be employed.

Especially preferred are mixtures of styrene and acrylonitrile.

As explained above, the graft copolymers are prepared by polymerizing the resin forming monomers, e.g., styrene and acrylonitrile, in the presence of the rubbery terpolymer, e.g., ethylene-propylene-diene. In one procedure, the rubbery copolymer or terpolymer is dissolved in an inert organic solvent, e.g., benzene, to form a cement, to which is added the desired amount of resin forming monomers and a radical initiator, e.g., peroxide. The mixture is heated to decompose the initiator and to polymerize the monomers. The graft copolymer which results is isolated, e.g., by precipitation with an antisolvent such as methanol.

The evidence indicates that at least a portion of the resin grafts onto the rubber to form a graft copolymer made up of a rubbery spine or backbone polymer and resinous side chains.

The proportion of resin forming monomers to rubber used in the graft polymerization can vary, for instance, from 1:4 to 4:1 on a weight basis.

The graft copolymers and methods of their preparation are described in greater detail by F.X. O'Shea in U.S Patent No. 3,642,950, by Albert Fournier, Jr. and Charles Paddock in U.S. Patent No. 4,166,081 and Peascoe in U.S. Patent No. 4,202,948. Suitable materials are also available commercially from Uniroyal, Inc. Co., Naugatuck, Connecticut under the trade designation ROVEL® resins.

Components (a) and (b) are compatible in widely variant proportions, for example, from 5 to 95 parts by weight of (a) and from 95 to 5 parts by weight of (b), per 100 parts by weight of (a) and (b) combined, with particular amounts being dependent on specific requirements.

The compositions can also include one or more other ingredients, such as supplementary non-resinous additives conventionally employed with polyester resins and blends of such resins. Examples include mineral fillers, e.g., clay, talc, mica, etc., reinforcing agents, e.g., fibrous or flaked glass, graphite whiskers, aluminum shavings, wollastonite, titanate whiskers, carbon filaments, etc.; pigments, dyes; processing aids; stabilizers; antioxidants; and so forth. These materials can be added in conventional amounts, e.g., from 1 to 50% by weight of the total composition.

Preparation of the compositions may be accomplished by tumble blending components (a), (b), and any other ingredients, extruding the blend and then injection molding the extrudate. The mode of preparation is not essential, however, and other well known procedures for preparing molded polyesters can be utilized.

## DESCRIPTION OF THE PREFERRED EMBODIMENTS

The following examples illustrate the invention:

### EXAMPLE 1

This illustrates a blend of polyester resin and grafted copolymers of styrene-acrylonitrile/ethylene-propylene-diene terpolymer in accordance with the invention.

Fifty parts by weight of poly(1,4-butylene terephthalate) resin (VALOX® 315, General Electric Co.), and 50 parts by weight of styrene-acrylonitrile grafted ethylene-propylene-5-ethylidene-2-norbornene (ROVEL® 701, Uniroyal, Inc.) were tumble blended, the blend was extruded at 255°C. and the extrudate was injection molded at 260°C. The molded composition was tested and found to have the following properties according to ASTM or modified ASTM test procedures:

## TABLE 1

|  | EXAMPLE 1 |
|---|---|
| Notched Izod impact strength, kgf cm/cm | |
| (3.2mm) | 9.2 |
| (6.4mm) | 7.6 |
| Unnotched Izod impact strength, ft./lb | |
| (1/8 in.) | >40 |
| (1/4 in.) | >21 |

## EXAMPLES 2-4

The procedure of the previous example was repeated to prepare and mold the following blends, with the physical properties shown.

TABLE 2

| INGREDIENTS, PARTS BY WEIGHT | A* | 2 | 3 | 4 |
|---|---|---|---|---|
| Poly(1,4-butylene terephthalate) resin (VALOX® 315, General Electric Co.) | | 80 | 20 | — |
| Poly(ethylene terephthalate) | | — | — | 50 |
| Styrene-acrylonitrile grafted terpolymer of ethylene-propylene-diene (ROVEL®, Uniroyal Inc.) | | 20 | 80 | 50 |
| PROPERTIES | | | | |
| Tensile strength at yield, psi | — | 7900 | 7100 | 7700 |
| Tensile strength at break, psi | — | 5200 | 5300 | 5100 |
| Tensile elongation, % | — | 65 | 41 | 69 |
| Flexural yield, psi | — | 11,900 | 9600 | 10,500 |
| Flexural modulus, psi x $10^5$ | — | 3.4 | 2.9 | 3.2 |
| Heat deflection temperature at 264 psi, °C. | — | 84.4 | 91.7 | 86.1 |
| Notched Izod impact strength kgf cm/cm (3.2mm) | 7.7 | 7 | 65 | 9.2 |
| Notched Izod impact strength kfg cm/cm (6.4mm) | 4.5 | 6 | 25 | 6.5 |

*Control of 50 weight percent VALOX® 315 a poly(1,4-butylene terephthalate and 50 weight percent acrylonitrile-butadiene-styrene polymer Lustran Ultra ABS, Ultra HX obtained from Monsanto.

The foregoing compositions processed well and the molded articles had smooth glossy appearances.

All of the above-mentioned patents and/or publications are incorporated herein by reference. Obviously, other modifications and variations of the invention are possible in light of the above disclosure. It is to be understood, therefore, that changes can be made in the particular embodiments shown without departing from the scope of the invention defined in the appended claims.

WHAT IS CLAIMED IS:

1. A thermoplastic resin composition, comprising a blend of (a) a high molecular weight polyester resin; and (b) an ethylene-propylene-non-conjugated diene terpolymer grafted with the homopolymer or copolymer of monoethyleneically unsaturated monomers having a phenyl, carbonyl or cyano group attached to a vinyl carbon.

2. A composition according to claim 1, in which component (a) is a poly ($C_2$-$C_4$ alkylene terephthalate) resin.

3. A composition according to claim 1, in which (a) is poly(1,4-butylene terephthalate) resin.

4. A composition according to claim 1, in which (a) is poly(ethylene terephthalate) resin.

5. A composition according to claim 1, in which component (b) is a graft copolymer of styrene-acrylonitrile and a rubbery terpolymer of ethylenepropylene and a polydiene.

6. A composition according to claim 5, in which (b) is a graft polymer of styrene-acrylonitrile on an ethylene-propylene-5-ethylidene-2-norbornene chain.

7. A composition according to claim 6, in which component (b) is present in combination with (c) a copolymer of styrene-acrylonitrile.

8. A composition according to claim 1, wherein component (a) is present in an amount of from about 95 to 5 parts by weight, per 100 parts by weight of (a) and (b) combined.

9. An article which has been molded from the composition of claim 1.

10. A composition according to claim 1, including a reinforcing agent.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 172 859 (B.N. EPSTEIN) * Column 3, line 51 - column 4, line 11; column 5, line 36 - column 8, line 35; column 9, lines 49-56; column 11, lines 15-22 * | 1-10 | C 08 L 67/02 C 08 L 51/04 |
| | --- | | |
| X | EP-A-0 056 123 (BASF AG) * Claims 1, 2; page 3, lines 16-33, page 2, lines 14-24 * | 1-5,8 | |
| | ----- | | |

| | TECHNICAL FIELDS SEARCHED (Int. Cl. ³) |
|---|---|
| | C 08 L 51/04 C 08 L 67/02 |

The present search report has been drawn up for all claims

| Place of search BERLIN | Date of completion of the search 21-09-1984 | Examiner IDEZ C.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82